# EUROPÄISCHE PATENTSCHRIFT

(11) **EP 0 255 686 B1**
(45) Veröffentlichungstag und Bekanntmachung des Hinweises auf die Patenterteilung: **24.02.1993**
(21) Anmeldenummer: 87110931.0
(22) Anmeldetag: 28.07.1987
(51) Int. Cl.: G02B 6/44

(54) **Verfahren zur Herstellung eines gefüllten optischen Übertragungselementes und Einrichtungen zur Durchführung des Verfahrens**
Method for producing a filled optical transmission element, and device for performing said method
Méthode pour la fabrication d'un élément optique de transmission rempli et dispositif pour la réalisation de la méthode

(30) Priorität: 31.07.1986 DE 3625909
(43) Veröffentlichungstag der Anmeldung: 10.02.1988
(73) Patentinhaber: SIEMENS AKTIENGESELLSCHAFT, 80333 München (DE)
(72) Erfinder: Mayr, Ernst, Ing., D-8130 Starnberg (DE)

(56) Entgegenhaltungen:
- EP-A- 0 066 201
- EP-A- 0 087 757
- EP-A- 0 132 827
- DE-A- 2 523 843
- DE-A- 3 239 430
- US-A- 4 409 154
- PATENT ABSTRACTS OF JAPAN, Band 7, Nr. 6 (P-167)[1151], 11. Januar 1983 & JP-A-57 165 804 (NIPPON DENSHIN DENWA KOSHA) 13-10-1982

## Beschreibung

Die Erfindung betrifft ein Verfahren zur Herstellung eines optischen Übertragungselementes, mit mindestens einer Lichtwellenleiterader, bei dem die Lichtwellenleiterader zwei Füllstufen für die Aufbringung von Füllmassen durchläuft, bei dem am Ausgang der ersten Füllstufe die dort aufgebrachte Füllmasse zum Teil abgestreift und nach der zweiten Füllstufe in einem Extruder eine Umhüllung aufgebracht wird.

Ein Verfahren dieser Art ist aus der EP-A1-0 066 201 bekannt. Dabei wird die erste Füllmasse in einer aus einem offenen Behälter bestehenden Füllstufe aufgebracht, der am Ausgang eine Düse aufweist, dessen lichte Weite etwa dem Durchmesser des Lichtwellenleiter-Bündels entspricht. In der zweiten Füllstufe wird die Zuführung der Füllmasse über eine Füllnadel vorgenommen, so daß auch hier drucklos gearbeitet wird. Derartige offene Füllsysteme bringen zwangsläufig die Gefahr mit sich, daß beim Fördervorgang der Füllmassen Luftbläschen mit in die Füllmasse hineingerissen werden.

Bei dem Verfahren gemäß der DE-OS 32 07 083 durchläuft das Lichtwellenleiterbündel eine erste, mit einer Füllmasse versehene Benetzungseinrichtung, welche als erste Füllstufe arbeitet. Das so mit der ersten Füllmasse versehene Lichtwellenleiterbündel wird mittels eines Rohres durch eine unter Druck stehende zweite Füllstufe hindurchgeführt, deren Füllmasse mit einem weiteren Rohr koaxial zum ersten Rohr übertragen wird. Beide Rohre müssen durch den Extruderkopf hindurchgeführt werden und enden im Bereich des Reckkegels der mittels des Extruders aufzubringenden Umhüllung.

Bei Übertragungselementen mit Lichtwellenleitern, welche in weiche Füllmassen eingebettet sind, muß darauf geachtet werden, daß möglichst keine oder zumindest nur volumenmäßig sehr kleine Lufteinschlüsse vorhanden sind. Andernfalls besteht nämlich die Gefahr, daß es z.B. bei einer starken Temperaturerhöhung im Rahmen der damit verbundenen Ausdehnung der Luftblase zu einer Schädigung der empfindlichen Lichtwellenleiter kommen kann.

Der vorliegenden Erfindung liegt die Aufgabe zugrunde, einen Weg aufzuzeigen, auf dem es möglich ist, die Anzahl der eingeschlossenen Luftbläschen zu verringern und das Volumen etwa noch vorhandener Luftbläschen möglichst klein zu halten.

Gemäß der Erfindung, welche sich auf ein Verfahren der eingangs genannten Art bezieht, wird dies dadurch erreicht, daß vor der zweiten Füllstufe in einem Zwischenbereich ein weiterer Abstreifvorgang durchgeführt und dabei ein weiterer Teil der Füllmasse abgestreift wird und daß im Zwischenbereich ein niedrigerer Druck als im Bereich der Füllstufen herrscht.

Eine Vorrichtung zur Durchführung dieses verfahrens ist gemäß Anspruch 11 ausgebildet.

Durch die Erfindung wird somit erreicht, daß etwaige im Bereich der ersten Füllstufe mit eingebrachte Luftbläschen beim Abstreifvorgang im Zwischenbereich insofern völlig entfernt werden, als sie in dem dort abgestreiften Bereich des Füllmaterials liegen. Nur die verbleibenden im innersten Teil der in ihrem Durchmesser reduzierten Füllmasse liegenden Gasbläschen können bis zur zweiten Füllstufe vordringen. Die Druckerhöhung im Inneren, also im Bereich der Füllstufen und der Druckabfall im Zwischenbereich bewirken, daß im gewissen Umfang auch innen liegende Luftbläschen in den äußeren Expansionsbereich ausweichen und damit abgedrängt werden. Während beim bekannten Stand der Technik einmal eingedrungene Luftbläschen, sei es über die erste Füllstufe oder über die zweite Füllstufe, praktisch keine Möglichkeit mehr haben nach außen zu entweichen, ist bei der Erfindung durch den im drucklosen Bereich stattfindenden Abstreifvorgang eine wesentliche Verbesserung erreicht.

Werden mehrere Lichtwellenleiteradern zu einem Bündel zusammengefaßt, so bringt die Erfindung zusätzlich den Vorteil, daß infolge des Abstreifvorganges etwaige Lücken, in welche noch keine Füllmasse eingetreten ist, innerhalb des Bündels auch noch mit Füllmasse angefüllt werden.

Die Erfindung hat außerdem noch den Vorteil, daß sie besonders für das Arbeiten mit hohen Durchlaufgeschwindigkeiten geeignet ist.

Die Erfindung und ihre Weiterbildungen werden nachfolgend anhand von Zeichnungen näher erläutert. Es zeigen:
- Figur 1: in Seitenansicht den Aufbau einer erfindungsgemäßen Füll- und Ummantelungseinrichtung und
- Figur 2: in Seitenansicht eine Füll- und Abstreifeinrichtung in Zusammenarbeit mit einer SZ-Verseilung.

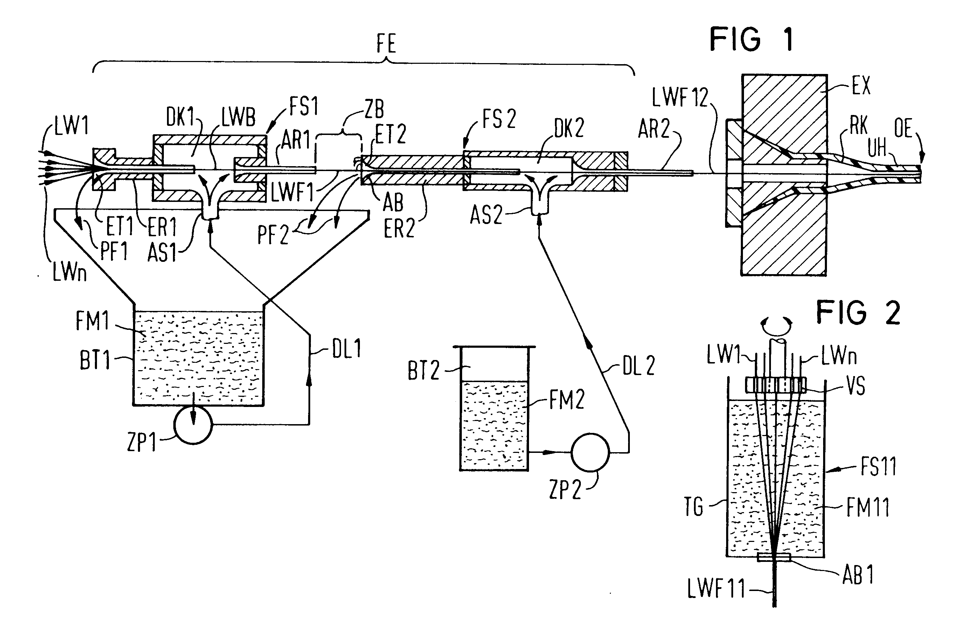

In Figur 1 ist eine Anzahl von Lichtwellenleiteradern LW1 bis LWn vorgesehen, welche von hier nicht dargestellten Vorratsspulen tangential oder überkopf abgezogen werden. Es ist aber auch möglich nur eine einzige Lichtwellenleiterader vorzusehen und diese, wie nachfolgend näher beschrieben wird, mit einer Füllmasse zu umgeben und anschließend mit einer Umhüllung zu versehen. Die nachfolgende Fülleinrichtung FE ist mindestens zweistufig aufgebaut und arbeitet mit einer ersten Füllstufe FS1 und einer zweiten Füllstufe FS2. Die Füllstufe FS1 ihrerseits besteht aus einem Einlaufrohr ER1 mit konischem Einlauftrichter ET1, einer Druckkammer DK1 und einem Auslaufrohr AR1. Das aus den Lichtwellenleiteradern LW1 bis LWn z.B. durch SZ-Verseilung gebildete Lichtwellenleiterbündel LWB wird im Bereich der Druckkammer DK1 mit der Füllmasse FM1 umgeben, welche in einem Vorratsbehälter BT1 untergebracht ist. Die Förderung der Füllmasse FM1 erfolgt über eine entsprechende Pumpe ZP1 (z.B. Zahnradpumpe) über eine Druckleitung DL1, welche an einen Anschlußstutzen AS1 der Füllstufe FS1 angeschlossen ist. Um zu vermeiden, daß hier im Bereich des Einlaufrohres ER1 Luftblasen bei der Zuführung des Lichtwellenleiterbündels LWB mit hineingerissen werden, werden die Größe der Bohrung im Einlaufrohr ER1 und der Druck in der Druckkammer DK1 so gewählt, daß am Ausgang des Einlaufrohres ER1, also im Bereich des Einlauftrichters ET1 Füllmasse FM1 herausgedrückt wird. Diese Füllmasse wird, wie durch den Pfeil PF1 angedeutet, in den Behälter BT1 rückgeführt, so daß also kein Materialverlust eintritt.

Am Ausgang der Druckkammer DK1 wird durch die Bohrung im Auslaufrohr AR1 festgelegt, wieviel Füllmasse FM1 auf dem Lichtwellenleiterbündel erhalten bleibt. Das so mit der Füllmasse beschichtete Lichtwellenleiterbündel am Ausgang des Auslaufrohres AR1 ist mit LWF1 bezeichnet und läuft, bevor es in die nachfolgende Füllstufe FS2 eintritt, durch einen drucklosen Zwischenbereich ZB hindurch, in dem etwaige, in der Füllmasse FM1 enthaltene Gasbläschen expandieren können. Vor dem Einlauf in die zweite Füllstufe FS2 wird ein hartes Abstreifen der Füllmasse FM1 durchgeführt, was mittels einer eigenen Abstreifeinrichtung (z.B. einer hier nicht dargestellten Lochblende o. dgl.) innerhalb des Zwischenbereiches ZB erfolgen kann oder aber durch entsprechende Gestaltung des nachfolgenden Einlaufrohres ER2 der nachfolgenden Füllstufe FS2. Das Einlaufrohr ER2 weist einen konischen Einlauftrichter ET2 auf, und ist in seinem nachfolgenden Bohrungsdurchmesser so dimensioniert, daß ein großer Teil der in der Druckkammer DK1 aufgebrachten Füllmasse FM1 abgestreift wird. Dieser abgestreifte Teil gelangt, wie durch den Pfeil PF2 angedeutet, in den Behälter BT1 zurück und kann weiter verwendet werden. Das Abstreifen der Füllmasse FM1 im Abstreifbereich AB beseitigt nicht nur die etwa von der Füllstufe FS1 dennoch mitgelieferten Luftbläschen, welche im abgestreiften Materialbereich enthalten sind, sondern ergibt auch zusätzlich für noch weiter innen liegende Luftbläschen einen gewissen Verdrängungseffekt entgegen der Durchlaufrichtung und in radialer Richtung nach außen. Dies beruht darauf, daß nach innen, d.h. im Bereich des Endes des Einlauftrichters ET2 eine Druckerhöhung eintritt, welche zur Folge hat, daß die Luftbläschen entgegen der Durchlaufrichtung und gleichzeitig radial nach außen abgedrängt werden und nicht ohne weiteres in die Bohrung des Einlaufrohres ER2 gelangen können. Es sollte volumenmäßig zwischen 10% und 50% der ersten Füllmasse abgestreift werden.

Während bei dem Behälter BT1 für die Füllstufe FS1 ein offener Behälter verwendet werden kann, ist der Behälter BT2 der Füllstufe FS2 so gestaltet, daß er möglichst weitgehend entgast wird, d.h. daß in seiner Füllmasse möglichst wenig Gasblasen enthalten sind (z.B. durch Anwendung von Unterdruck). Die Füllmasse FM2 wird über eine Pumpe ZP2 und eine nur schematisch angedeutete Druckleitung DL2 dem Anschlußstutzen AS2 der Druckkammer DK2 der Füllstufe FS2 zugeführt. Die so aufgebrachte Füllmasse FM2 liegt am Ausgang des Auslaufrohres AR2 der Druckkammer DK2 zusätzlich vor und das so erhaltene Bündel ist mit LWF12 bezeichnet, wobei im inneren ein kleiner Teil von Füllmasse FM1 der Füllstufe FS1 und im äußeren Teil Füllmasse FM2 der Füllstufe FS2 vorhanden ist.

Besonders vorteilhaft ist es, daß bei der erfindungsgemäßen Einrichtung zur Aufbringung von Füllmassen die Füllnadeln, also z.B. das Auslaufrohr AR2 nicht bis in den Reckkegel RK der vom nachfolgenden Extruder EX aufgebrachten Umhüllung UH reichen muß. Dies hat neben der leichteren Zugänglichkeit auch noch den Vorteil, daß im Bereich des Extruders EX eine erneute Entspannung der Füllmassen FM1 und FM2 erfolgen kann, so daß Gasblasenreste vor allem aus dem Außenbereich (verstärkt auch durch die erhöhte Temperatur im Bereich des Extruders EX) noch nach außen gelangen können, bevor die Umhüllung UH aufgebracht wird und damit das fertige optische Übertragungselement UE hergestellt ist.

Für die einzelnen vorstehend beschriebenen Stufen können zweckmäßig folgende Betriebsgrößen vorgesehen werden:
- Bohrung des Einlaufrohres 1 ER zwischen 100 und 600 % größer als Außendurchmesser des unbeschichteten Lichtwellenleiterbündels LWB
- Druck in der Druckkammer DK1 zwischen 2 und 50 bar (Bei Überkopfabzug wird die Füllstufe FS1 zur Füllmassenbremse, bekommt längere Einlauf- und Auslaufrohre und der Druck wird höher)
- Bohrung des Auslaufrohres AR1 zwischen 200 und 400 % größer als der Außendurchmesser des Lichtwellenleiterbündels LWB
- Bohrung des Einlaufrohres ER1 und damit der Abstreifeinrichtung AB zwischen 100 % und 300 % größer als der Außendurchmesser des Lichtwellenleiterbündels LWB und auf jeden Fall kleiner als die Bohrung des Auslaufrohres AR1
- Arbeitsdruck in der Druckkammer DK2 zwischen 1 und 50 bar
- Bohrungsdurchmesser des Auslaufrohres AR2 zwischen 100% und 700 % größer als das Lichtwellenleiterbündel LWB und etwa gleich dem Innendurchmesser der fertigen Umhüllung.

Die Füllstufe FS1 bietet wegen des Durchlaufs der Füllmasse FM1 sowohl in Durchlaufrichtung (d.h. über das Auslaufrohr AR1) als auch entgegen der Durchlaufrichtung (über das Einlaufrohr ER1) zusätzlich auch die Möglichkeit, daß es als Steuerung für die Zugkraft des Lichtwellenleiterbündels LWB benutzt werden kann. Wird entgegen der Durchlaufrichtung, also über das Einlaufrohr ER1, sehr viel Füllmasse FM1 aus der Druckkammer DK1 zum Einlauftrichter ET1 geführt, dann tritt eine stärkere Bremswirkung ein. Bei Überkopfablauf können anstelle eines Einlaufrohres ER1 für n Fasern bis zu n getrennte (gleichlange) Einlaufrohre vorgesehen werden. Wird weniger Füllmasse FM1 in dieser Richtung bewegt oder mit geringerem Druck gearbeitet, dann tritt eine geringere Bremswirkung ein. Es wird also in diesem Bereich nicht nur das Eindringen von Luft verhindert, sondern zusätzlich ist eine dosierte Bremswirkung durch die als Füllmassenbremse arbeitende erste Füllstufe FS1 erreichbar, was insbesondere bei überkopf abgezogenen Fasern von Bedeutung ist, weil deren Glättung und Ausrichtung dadurch verbessert werden kann. Wird mit Aderbremsung gearbeitet, dann muß der Druck in der ersten Füllstufe FS1 höher gewählt werden als in der zweiten Füllstufe FS2, vorzugsweise 5 bis 10 mal so groß.

Ohne Bremswirkung in der ersten Stufe ist es zweckmäßig, wenn in der Füllstufe FS2 der Druck etwa zwischen 2 und 50 mal so groß gewählt wird wie in der Füllstufe FS1. Außerdem ist es zweckmäßig, wenn im Zwischenbereich ZB der Druck niedriger gewählt wird und etwa dem Umgebungsdruck = Atmosphärendruck entspricht.

Das vorstehend beschriebene Verfahren zur Einbringung der Füllmasse hat den Vorteil, daß der Fülldruck hinter der letzten Füllstufe FS2, also am Ausgang des Auslaufrohres AR2, entkoppelt wird und das beschichtete Bündel LWF12 drucklos in den Reckkegel RK der Umhüllung UH einlaufen kann. Ablagerungen an der als Füllnadel anzusehenden Auslauföffnung des Auslaufrohres AR2 entfallen. Sollten Sie dennoch auftreten, lassen sie sich (weil die Auslauföffnung zugänglich ist, da das Auslaufrohr AR2 weit vor dem Ende des Reckkegels RK endet) leicht abstreifen. Ebenso ist die Bildung von Kondenswasser auf der Füllnadel vermieden.

Reicht dagegen das Auslaufrohr AR2 bis zum Reckkegel RK, so können Monomere auftreten, die bei der Extrusion freiwerden und einen wachsenden Nadelbelag bilden, der den Reckkegel RK stören kann. Es kann sich dort auch Füllmasse auf der Füllnadel ablagern, und in Verbindung mit den Monomeren einen zähen, den Reckvorgang störenden Belag ergeben. Beim Anfahren kann Schmelze an der Füllnadel hängenbleiben, was zu größeren Störungen führen kann. Wenn die Füllnadel AR2 bis in den Reckkegel RK hineinreicht, ist eine schwierige Justierung dieser Füllnadel erforderlich, während bei der Erfindung nur das fertig beschichtete Bündel LWF12 nippelmittig in den Reckkegel RK einzulaufen braucht. Bei gleichem Extruderwerkzeug EX ist der Reckkegel RK immer gleich reproduzierbar und hängt nicht von einer etwaigen Eintauchtiefe der Füllnadel AR2 ab, weil diese ja bereits vor dem Extruderkopf EX endet.

Sowohl die Einlaufrohre ER1 und ER2 als auch die Auslaufrohre AR1 und AR2 sind zweckmäßig so ausgebildet, daß sie über Schraubverbindungen an den jeweiligen Druckkammern DK1 und DK2 auswechselbar angeordnet sind. Dadurch läßt sich in einfacher Weise eine Anpassung und Umrüstung bei verschiedenen Bündeldurchmessern (d.h. bei unterschiedlichen Aderzahlen) herstellen. Durch die Erfindung wird die Füllnadelvorratshaltung ebenfalls einfacher, weil sie sich hauptsächlich auf Füllnadeln, insbesondere entsprechend dem Auslaufrohr AR2, beschränkt, deren Innendurchmesser dem Innendurchmesser der Produktpalette entspricht. Als Richtwert gilt, daß das Auslaufrohr (Füllnadel) AR2 dem Innendurchmesser des herzustellenden Produktes (etwa von 0,45 mm bis 3,5 mm) entspricht. Da die Füllmassenbeschichtung konstant ist, treten kaum Regelschwankungen auf. So ist es z.B. auch möglich bei Aufbringen zweifacher Umhüllungen UH eine Koextrusion beider Umhüllungsmaterialien in einem einzigen Extruderkopf durchzuführen.

Für die Füllmassenaufbereitung bietet die Erfindung erhebliche Vorteile. Zwar sollten große Gasblasen, wie sie z.B. beim Umschütten der Füllmasse in den Druckbehälter BT1 und BT2 entstehen, auch bei der Druckbeschichtung vermieden werden. Es genügt jedoch hier, die Füllmasse nur beim Umschütten beim zweiten Behälter BT2 leicht zu evakuieren. Im Druckbehälter BT2 wird ein kleines Vakuum angelegt, das die Füllmasse über eine Breitschlitzdüse in den Behälter zieht. Nähere Einzelheiten hierzu sind beispielsweise in der DE-OS 35 16 206 beschrieben. Unten am Druckbehälter ist eine den Förderdruck begrenzende Zahnradpumpe oder Schneckenpumpe eingebaut, welche die Füllmasse zur Beschichtungszahnradpumpe ZP2 fördert.

Der Vorteil gegenüber den bisherigen Ausführungsformen besteht darin, daß der Druckbehälter BT2 mit der Füllmasse FM2 nicht mehr unter Druck stehen muß und ein Nachfüllen während des Betriebes möglich ist, d.h. Rund-um-die-Uhr-Fertigung und eine zentrale Füllmassenversorgung einfacher durchführbar sind.

Die erfindungsgemäße Einrichtung ist sowohl für horizontal- als auch für vertikal arbeitende Durchlaufrichtungen geeignet. Die Füllmassen FM1 und FM2 können gleich gewählt werden, sie sollten so beschaffen sein, daß sie nicht abtropfen, bevor sie den Reckkegel RK erreichen. Besonders geeignet sind thixotropierte Füllmassen oder hochviskose Füllmassen oder vernetzende Füllmassen, denen ein Thixotropiermittel zugemischt werden (z.B. bis max. 3%) hodisperses Siliziumdioxid ("Aersosil").

Die Vorbeschichtung in der ersten Füllstufe FS11 kann auch, wie in Figur 2 dargestellt, durch ein Tränkgefäß TG erfolgen, was insbesondere bei vertikalen Arbeitsabläufen vorteilhaft ist. Auch lassen sich die Adern LW1 bis LWn des Lichtwellenleiterbündels durch einen reversierend angetriebenen Verseilkopf VS zu einem SZ-verseilten Bündel zusammenfassen, wobei diese Anordnung so eine Füllstufe FS11 bildet, welche funktionsmäßig im wesentlichen der Füllstufe FS1 der Figur 1 entspricht. Das so vorbeschichtete Bündel LWF11 läuft eine Abstreifeinrichtung AB1, welche am Ausgang des Tränkgefäßes TG vorgesehen ist. Hierbei sind keine so hohen Fertigungsgeschwindigkeiten erzielbar, weil in das Bündel leichter Luft eingeschlossen werden kann. Der Abstreifer AB1 liegt im Verseilpunkt oder dahinter.

## Patentansprüche

1. Verfahren zur Herstellung eines optischen Übertragungselementes (OE), mit mindestens einer Lichtwellenleiterader (LW1 bis LWn), bei dem die Lichtwellenleiterader zwei Füllstufen (FS1, FS2) für die Aufbringung von Füllmassen (FM1,FM2) durchläuft, bei dem am Ausgang der ersten Füllstufe (FS1) die dort aufgebrachte Füllmasse (FM1) zum Teil abgestreift und nach der zweiten Füllstufe (FS2) in einem Extruder (EX) eine Umhüllung (UH) aufgebracht wird,
**dadurch gekennzeichnet,**
daß vor der zweiten Füllstufe (FS2) in einem Zwischenbereich (ZB) ein weiterer Abstreifvorgang durchgeführt und dabei ein weiterer Teil der Füllmasse (FM1) abgestreift wird und daß im Zwischenbereich (ZB) ein niedrigerer Druck als im Bereich der Füllstufen (FS1, FS2) herrscht.

2. Verfahren nach Anspruch 1,
**dadurch gekennzeichnet,**
daß im Bereich der Füllstufen (FS1) und (FS2) jeweils Füllmassen gleicher Zusammensetzung aufgebracht werden.

3. Verfahren nach einem der vorhergehenden Ansprüche,
**dadurch gekennzeichnet,**
daß beim Abstreifvorgang im Zwischenbereich (ZB) volumenmäßig etwa zwischen 10% und 50% der aufgebrachten ersten Füllmasse (FM1) abgestreift werden.

4. Verfahren nach einem der vorhergehenden Ansprüche,
**dadurch gekennzeichnet,**
daß der Druck in der zweiten Füllstufe (FS2) zwischen 2 und 50 mal so groß gewählt wird wie der Druck in der ersten Füllstufe (FS1).

5. Verfahren nach einem der Ansprüche 1 bis 3,
**dadurch gekennzeichnet,**
daß bei der ersten Füllstufe (FS1) die zugeführte Füllmasse (FM1) sowohl in Durchlaufrichtung als auch entgegen der Durchlaufrichtung geführt wird und so eine Zug- oder Bremsregulierung des durchlaufenden Lichtwellenleiterbündels (LWB) erzielt wird.

6. Verfahren nach Anspruch 5,
**dadurch gekennzeichnet,**
daß der Druck in der ersten Füllstufe (FS1) höher gewählt ist als in der zweiten Füllstufe (FS2), vorzugsweise zwischen 5 und 10 mal so hoch.

7. Verfahren nach einem der vorhergehenden Ansprüche,
**dadurch gekennzeichnet,**
daß die abgestreifte Füllmasse (FM1) und die gegebenenfalls entgegen der Durchlaufrichtung aus der Füllstufe (FS1) austretenden Füllmassenanteile (PF1) in den Vorratsbehälter (BT1) der Füllmasse (FM1) der ersten Füllstufe (FS1) zurückgeführt werden.

8. Verfahren nach einem der vorhergehenden Ansprüche,
**dadurch gekennzeichnet,**
daß bei der Füllmasse (FM2) für die zweite Füllstufe (FS2) eine Entgasung, vorzugsweise durch Anlegen eines Unterdrucks, durchgeführt wird, bevor die Füllmasse (FM2) der zweiten Füllstufe (FS2) zugeführt wird.

9. Verfahren nach einem der vorhergehenden Ansprüche,
**dadurch gekennzeichnet,**
daß die Lichtwellenleiteradern (LW1 bis LWn) im Einlaufbereich (ER1,ER2) und/oder im Auslaufbereich (AR1,AR2) der Füllstufen (FS1,FS2) in rohrförmigen Führungseinrichtungen geführt werden.

10. Verfahren nach einem der vorhergehenden Ansprüche,
**dadurch gekennzeichnet,**
daß die mit beiden Füllmassen beschichteten Lichtwellenleiter (LWF12) noch vor Erreichen eines am Ausgang des Extruders gebildeten Reckkegels (RK) für die aufzubringende Umhüllung (UH) aus der zweiten Füllstufe (FS2) bzw. aus dem zugehörigen letzten Führungsrohr (AR2) herauslaufen und ein Stück frei durch den Extruder (EX) hindurchgeführt werden.

11. Einrichtung zur Durchführung des Verfahrens nach einem der vorhergehenden Ansprüche
zur Herstellung eines optischen Übertragungselementes (OE), mit mindestens einer Lichtwellenleiterader (LW1 - LWn), bestehend aus
zwei Füllstufen (FS1, FS2) für das Aufbringen von Füllmassen (FM1, FM2),
den zugehörigen Zuführungsvorrichtungen (BT1, AS1, ZP1, DL1; BT2, AS2, ZP2, DL2) für die Füllmassen,
einer Abstreifeinrichtung am Ausgang der ersten Füllstufe (FS1) zum Abstreifen eines Teils der aufgebrachten Füllmasse (FM1)
und einem Extruder (EX) zum Aufbringen einer Umhüllung (UH),
wobei die Füllstufen (FS1, FS2) und der Extruder (EX) so angeordnet sind, daß die Lichtwellenleiterader nacheinander die erste Füllstufe, die zweite Füllstufe und den Extruder durchläuft,
**dadurch gekennzeichnet,**
daß im Zwischenbereich (ZB) zwischen der ersten Füllstufe (FS1) und der zweiten Füllstufe (FS2) ein weitere Abstreifeinrichtung (AB) zum Abstreifen eines weiteren Teils der in der ersten Füllstufe (FS1)
für die dort aufgebrachte Füllmasse vorgesehen ist und daß die Füllstufen (FS1,FS2) jeweils aus Druckkammern (DR1, DR2) mit- und Auslaufrohren (ER1, ER2; AR1, AR2) an deren Stirnseiten zur Durchführung der Lichtwellenleiteradern bestehen, wobei die Querschnitte der Druckkammern wesentlich größer als die Querschnitte der Ein- und Auslaufrohre sind.

12. Einrichtung nach Anspruch 11,
**dadurch gekennzeichnet**,
daß das Auslaufrohr der zweiten Füllstufe (FS2) vor einem am Ausgang des Extruders gebilteten Reckkegel (RK) und vorzugsweise vor dem der Aufbringung der Umhüllung (UH) dienenden Extruder (EX) endet.

13. Einrichtung nach einem der vorgehenden Ansprüche,
**dadurch gekennzeichnet,**
daß der ersten Füllstufe (FS1) und der Abstreifeinrichtung (AB) im Zwischenbereich eine gemeinsame Auffangeinrichtung (BT1) für überschüssiges Füllmaterial (FM1) zugeordnet ist.

## Claims

1. Method for producing an optical transmission element (OE) having at least one optical waveguide lead (LW1 to LWn), in which the optical waveguide lead passes through two filling stages (FS1, FS2) for applying filling compounds (FM1, FM2), in which at the outlet of the first filling stage (FS1) the filling compound (FM1) applied there is partly stripped off and after the second filling stage (FS2) a coating (UH) is applied in an extruder (EX), characterised in that before the second filling stage (FS2) a further stripping operation is carried out in an intermediate region (ZB) and in the process a further portion of the filling compound (FM1) is stripped off, and in that in the intermediate region (ZB) a lower pressure prevails than in the region of the filling stages (FS1, FS2).

2. Method according to Claim 1, characterised in that filling compounds of the same composition are respectively applied in the region of the filling stages (FS1) and (FS2).

3. Method according to one of the preceding claims, characterised in that approximately between 10% and 50% by volume of the first filling compound (FM1) applied is stripped off in the stripping operation in the intermediate region (ZB).

4. Method according to one of the preceding claims, characterised in that the pressure in the second filling stage (FS2) is selected between 2 and 50 times as large as the pressure in the first filling stage (FS1).

5. Method according to one of Claims 1 to 3, characterised in that in the first filling stage (FS1) the supplied filling compound (FM1) is guided both in the direction of passage and against the direction of passage, resulting in the achievement of control of the pulling or braking of the optical fibre bundle (LWB) passing through.

6. Method according to Claim 5, characterised in that the pressure in the first filling stage (FS1) is selected higher than in the second filling stage (FS2), preferably between 5 and 10 times as high.

7. Method according to one of the preceding claims, characterised in that the stripped off filling compound (FM1) and the portions (PF1) of filling compound emerging, as the case may be, against the direction of passage from the filling stage (FS1) are guided back into the supply reservoir (BT1) of the filling compound (FM1) of the first filling stage (FS1).

8. Method according to one of the preceding claims, characterised in that degassing is carried out, preferably by applying an underpressure, in the case of the filling compound (FM2) for the second filling stage (FS2) before the filling compound (FM2) is supplied to the second filling stage (FS2).

9. Method according to one of the preceding claims, characterised in that the optical waveguide leads (LW1 to LWn) are guided in the inlet region (ER1,ER2) and/or in the outlet region (AR1,AR2) of the filling stages (FS1,FS2) in tubular guide devices.

10. Method according to one of the preceding claims, characterised in that the optical waveguides (LWF12) coated with two filling compounds run out from the second filling stage (FS2) or from the associated last guide tube (AR2) even before reaching a stretch cone (RK) for the coating (UH) to be applied, which is formed at the outlet of the extruder, and a piece is guided freely through the extruder (EX).

11. Device for carrying out the method according to one of the preceding claims for producing an optical transmission element (OE) having at least one optical waveguide lead (LW1-LWn), comprising two filling stages (FS1, FS2) for applying filling compounds (FM1, FM2), the associated supply devices (BT1, AS1, ZP1, DL1; BT2, AS2, ZP2, DL2) for the filling compounds, a stripping device at the outlet of the first filling stage (FS1) for stripping off a portion of the applied filling compound (FM1), and an extruder (EX) for applying a coating (UH), the filling stages (FS1, FS2) and the extruder (EX) being arranged such that the optical waveguide lead successively passes through the first filling stage, the second filling stage and the extruder, characterised in that in the intermediate region (ZB) between the first filling stage (FS1) and the second filling stage (FS2) there is provided a further stripping device (AB) for stripping off a further portion of the filling compound applied in the first filling stage (FS1), and in that the filling stages (FS1, FS2) in each case comprise pressure chambers (DR1, DR2) having inlet and outlet tubes (ER1, ER2; AR1, AR2) on their end faces for guiding through the optical waveguide leads, the cross-sections of the pressure chambers being substantially larger than the cross-sections of the inlet and outlet tubes.

12. Device according to Claim 11, characterised in that the outlet tube of the second filling stage (FS2) ends before a stretch cone (RK), which is formed at the outlet of the extruder, and preferably before the extruder (EX) serving to apply the coating (UH).

13. Device according to one of the preceding claims, characterised in that the first filling stage (FS1) and the stripping device (AB) in the intermediate region are assigned a common collecting device (BT1) for excess filling compound (FM1).

## Revendications

1. Procédé pour fabriquer un élément optique de transmission (OE), comportant au moins un conducteur de guide d'ondes optiques (LW1 à LWn), selon lequel le conducteur de guide d'ondes optiques traverse deux étages de remplissage (FS1,FS2) pour le dépôt de masses de remplissage (FM1,FM2), et selon lequel la masse de remplissage (FM1), déposée à la sortie du premier étage de remplissage (FS1), est partiellement retirée par raclage en cet endroit et une gaine (UH) est déposée, en aval du second étage de remplissage (FS2), dans une extrudeuse (EX), caractérisé par le fait qu'une autre opération de raclage est exécutée en amont du second étage de remplissage (FS2), dans une zone intercalaire (ZB) et qu'une autre partie de la masse de remplissage (FM1) est retirée par raclage et qu'il règne dans la zone intercalaire (ZB) une pression plus faible que dans la zone des étages de remplissage (FS1,FS2).

2. Procédé suivant la revendication 1, caractérisé par le fait qu'on dépose respectivement des masses de remplissage de même composition dans la zone des étages de remplissage (FS1 et FS2).

3. Procédé suivant l'une des revendications précédentes, caractérisé par le fait que lors de l'opération de raclage, dans la zone incercalaire (ZB), une proportion comprise environ entre 10 % et 50 % en volume de la première nasse de remplissage déposée (FM1) est retirée par raclage.

4. Procédé suivant l'une des revendications précédentes, caractérisé par le fait que la pression dans le second étage de remplissage (FS2) est choisie entre 2 et 50 fois supérieure à la pression dans le premier étage de remplissage (FS1).

5. Procédé suivant l'une des revendications 1 à 3, caractérisé par le fait que dans le premier étage de remplissage (FS1), la masse de remplissage envoyée (FM1) est guidée aussi bien dans le sens de circulation qu'en sens opposé du sens de circulation et que l'on obtient ainsi une régulation par tirage ou freinage du faisceau circulant de guides d'ondes optiques (LWB).

6. Procédé suivant la revendication 5, caractérisé par le fait qu'on choisit la pression dans le premier étage de remplissage (FS1) plus élevée, de préférence entre 5 et 10 fois, que dans le second étage de remplissage (FS2).

7. Procédé suivant l'une des revendications précédentes, caractérisé par le fait que la masse de remplissage (FM1) retirée par raclage et les parties (PF1) de la masse de remplissage, qui sortent éventuellement en sens opposé du sens de circulation, à partir de l'étage de remplissage (FS1), sont renvoyées au réservoir (BT1) de la masse de remplissage (FM1) du premier étage de remplissage (FS1).

8. Procédé suivant l'une des revendications précédentes, caractérisé par le fait que, dans le cas de la masse de remplissage (FM2) pour le second étage de remplissage (FS2), on exécute un dégazage, de préférence par application d'une dépression, avant que la masse de remplissage (FM2) soit envoyée au second étage de remplissage (FS2).

9. Procédé suivant l'une des revendications précédentes, caractérisé par le fait que les conducteurs (LW1 à LWn) des guides d'ondes optiques sont guidés dans la zone d'entrée (ER1,ER2) et/ou dans la zone de sortie (AR1,AR2) des étages de remplissage (FS1,FS2), dans des dispositifs tubulaires de remplissage.

10. Procédé suivant l'une des revendications précédentes, caractérisé par le fait que les guides d'ondes optiques (LWF12), recouverts par les deux masses de remplissage, sortent du second étage de remplissage (FS2) ou du dernier tube associé de guidage (AR2), avant d'atteindre un cône d'étirage (RK), formé à la sortie de l'extrudeuse, pour l'enveloppe (UH) devant être déposée, et traverse librement, sur une partie, l'extrudeuse (EX).

11. Dispositif pour la mise en oeuvre du procédé suivant l'une des revendications précédentes pour fabriquer un élément optique de transmission (OE), comportant au moins un conducteur (LW1-LWn) de guide d'ondes optiques, constitué par
deux étages de remplissage (FS1,FS2) pour le dépôt de masses de remplissage (FM1,FM2),
les dispositifs associés d'amenée (BT1,AS1,ZP1,DL1; BTZ,AS2, ZP2,DL2) pour les masses de remplissage,
un dispositif de raclage monté à la sortie du premier étage de remplissage (FS1) pour retirer par raclage une partie de la masse de remplissage (FM1) déposée,
et une extrudeuse (EX) pour déposer une gaine (UH),
les étages de remplissage (FS1,FS2) et l'extrudeuse (EX) étant disposés de telle sorte que le conducteur de guides d'ondes optiques traverse successivement le premier étage de remplissage, le second étage de remplissage et l'extrudeuse, caractérisé par le fait
que dans la zone intercalaire (ZB) entre le premier étage de remplissage (FS1) et le second étage de remplissage (FS2), il est prévu un autre dispositif de raclage (AB) servant à retirer par raclage une autre partie de la masse de remplissage déposée dans le premier étage de remplissage (FS1), et que les étages de remplissage (FS1,FS2) sont constitués respectivement par des chambres de pression (DR1,DR2) comportant des tubes d'entrée et de sortie (ER1,ER2; AR1,AR2) au niveau de leurs faces frontales pour la traversée des conducteurs des guides d'ondes optiques, les sections transversales des chambres de pression étant nettement supérieures aux sections transversales des tubes d'entrée et de sortie.

12. Dispositif suivant la revendication 11, caractérisé par le fait que le tube de sortie du second étage de remplissage (FS2) se termine en amont d'un cône d'étirage (RK) formé à la sortie de l'extrudeuse et de préférence en amont de l'extrudeuse (EX) utilisée pour le dépôt de la gaine (UH).

13. Dispositif suivant l'une des revendications précédentes, caractérisé par le fait qu'un dispositif commun de collecte (BT1) pour le matériau de remplissage en excès (FM1) est associé au premier étage de remplissage (FS1) et au dispositif de raclage (AB) dans la zone intermédiaire.
